# EUROPEAN PATENT APPLICATION

(11) **EP 1 353 528 A1**
(43) Date of publication of application: **15.10.2003**
(21) Application number: 02360119.8
(22) Date of filing: 11.04.2002
(51) Int. Cl.: H04Q 11/04, H04M 3/533

(54) **A method for exchanging text messages of limited size, a short message server, a terminal and a program module therefore**

(71) Applicant: ALCATEL, 75008 Paris (FR)
(72) Inventor: Kotar, Peter-Christos, 73207 Plochingen (DE)
(74) Representative: Rausch, Gabriele, Dr.

(57) **Abstract**

The invention concerns a method for exchanging text messages of limited size, further referred to as short message, over a communication network (CN) comprising a signalling network for the control of communications services, wherein a short message server (SC) controls the exchange of said short messages, wherein a sending terminal (TE1) generates a data packet (OM) comprising a short message and a header, the header comprising the (addressing) numbers of each the sending terminal (TE1), the receiving terminal (TE2) and the short message server (SC), the sending terminal (TE1) transmits said data packet to an exchange (LEX1) via a signalling channel, the exchange forwards said data packet to the short message server (SC) over said signalling network and the short message server (SC) forwards a corresponding data packet (IM) to the receiving terminal (TE2), and a short message server (SC), a terminal (TE1,TE2) and a program module therefore.

## Description

The invention relates to a method for exchanging text messages of limited size according to the preamble of claim 1, a short message server according to the preamble of claim 4, a terminal according to the preamble of claim 5 and a software module according to the preamble of claim 6.

The so-called Short Message Service (SMS) is a supplementary service in present mobile and fixed telecommunication networks to enable a user the to send and receive short text messages of a limited size. The short messages are exchanged between the sending and receiving user via a Short Message Service Center (SM-SC).

Said short message service started in mobile networks, e.g. the widely used GSM (abbreviation for: Global System for Mobile Communication), where a specific protocol stack is used for sending short messages. Recently, the short message service was made available for fixed network users.

The problem of the existing short message service in fixed networks is, that said information is exchanged over bearer channels of said network and to the corresponding terminals. Thus, the exchange of a short message in the fixed is treated like a normal phone call and thus blocking the corresponding network resources in a similar way. Integrated Services Digital Network terminals today thus send and receive said messages over a bearer channel (B-channel). The discrimination between SMS messages and other phone calls is performed by an SMS receiver module in the receiving terminal picking up the payload text information and displaying it on a display of the terminal.

The object of the invention is to propose a method for an automatic exchange of short text messages between communications terminals via short message service centres by using signalling channels at the network user interface and signalling communication channels (number 7 signalling) within the network.

This object is achieved by a method according to the teaching of claim 1, a short message server according to the teaching of claim 4, a terminal according to the teaching of claim 5 and a program module according to the teaching of claim 6.

The main idea of the invention is to realise a short messages service as known in the GSM network by integration a corresponding service as service feature within a (fixed) communications network like the ISDN. A short message is put into a data container by a sending terminal, comprising a short message entered by a user and a header for transparent transport over the signalling channel to said network and the signalling network within said network. The header thus comprises the number of each the sending terminal, a receiving terminal and a short message server. The short message server evaluates the number of the receiving terminal and forwards a corresponding data packed comprising said short message to said receiving terminal or to an appropriate device.

Further developments of the invention can be gathered from the dependent claims and the following description.

In the following the invention will be explained further making reference to the attached drawings in which:
- Fig.1: schematically shows an ISDN network with a short message service centre according to the invention with two terminals according to the invention for carrying out a method for exchanging text messages according to the invention,
- Fig.2: schematically shows said short message service centre delivering short messages to terminals of different networks and
- Fig.3: shows parts of a script for definitions of operations and errors required for the SMS service to be stored in a terminals according to the invention.

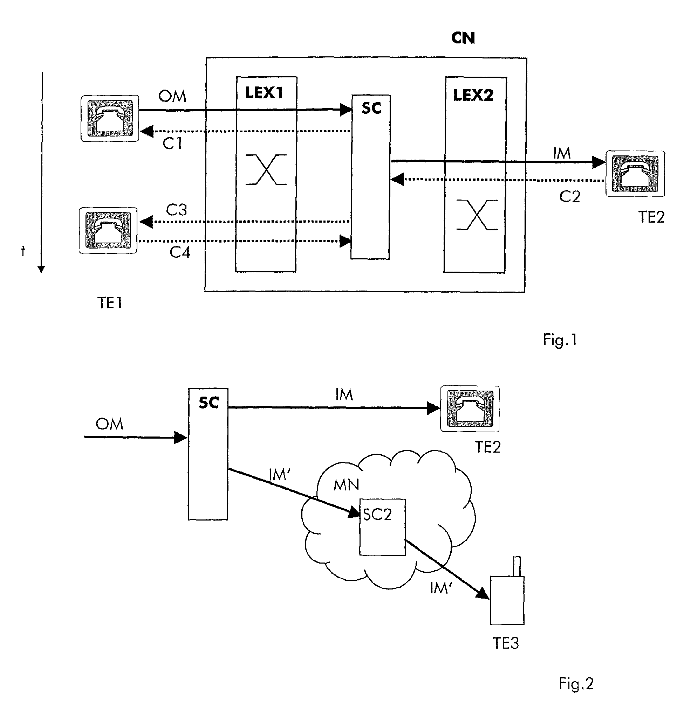

Fig.1 shows an ISDN network CN comprising a first local exchange LEX1, a second local exchange LEX2 and a short message service centre SC and further a sending or originating terminal TE1 and a receiving or terminating terminal T2. A time axis t on the left side marks the temporal sequence of following messages or reports symbolised as arrows: An outgoing message OM is sent from the originating terminal over the first local exchange LEX1 to the short message service centre SC. A submit report or first confirmation C1 is sent back to the originating terminal TE1. Then, an incoming message IM is sent from the short message service centre SC to the receiving terminal TE2 over the second local exchange LEX2 and a delivery report or second confirmation C2 is sent back over said second local exchange LEX2 to the short message service centre SC. Finally, a status report or third confirmation C3 is sent from the short message service centre SC over said second local exchange LEX2 to the originating terminal TE1, that replies with a further delivery report or fourth confirmation C4.

In the following, by way of example, a sequence of functions according to Fig.1 is described in details:

As known from the prior art, a sending user of a short message enters a short message into the sending terminal TE1 together with the (address) number of the receiving terminal TE2 (called number) using the terminals keyboard. The number of the short message service centre SC may be stored in the terminal TE1 or entered manually by the user.

Pressing a specific key of said keyboard, the terminal starts sending the outgoing message OM over a signalling channel interface. According to the invention said outgoing message OM comprises a short message as known in the GSM according to the ETSI (European Telecommunications Standards Institute) standard ETS 300 536 and a header with information to allow the transport of said short message within the ISDN. As known from the prior art, the short message comprises the text information entered by the user and further address and control information. The header comprises the number of the sending terminal TE1, the number of the receiving terminal TE2 and the number of the short message serving centre SC.

In an optional step, the first local exchange LEX1 checks, whether the user has subscribed to a corresponding short message service. In the case, that he has not subscribed (not found in a list stored in the exchange), the forwarding of said outgoing message OM is refused and a corresponding information, not shown in Fig.1, is send back to the sending terminal TE1. Otherwise said outgoing message OM is forwarded to the short message serving centre SC.

After reception of said outgoing message OM, an optional submit report C1 according to the prior art is sent from the short message serving centre SC to the sending terminal TE1 and may be either a positive report, which confirms the correct submission of the short message, or a negative report, which informs that the short message was not successfully submitted including a corresponding error reason information.

In a further step, the short message serving centre SC evaluates the header of the received outgoing message OM. If the receiving terminal is an ISDN terminal, the outgoing message OM is send as incoming message to the receiving terminal TE2 without modifications. Otherwise a procedure described under Fig.2 will be carried out.

On reception of the incoming message IM in the receiving terminal TR2, an optional deliver report C2 according to the prior art is sent to the short message serving centre SC and may be either a positive report, which confirms the correct delivery of an SM to the receiving terminal TE2, or a negative report for informing the originating terminal TE1 (with status report C3), that the short message was not successfully including a corresponding error reason information.

If the option to provide a status report C3 is invoked and supported, a deliver report C4 is sent from the originating terminal TE1 (or network) to the short message serving centre SC to acknowledge a correct receipt of the status report C3.

Having received one or more short messages, the receiving user can subsequently read, store or delete the messages on its terminal TE2.

If the short message serving centre SC supports a so-called "Replace Short Message" Function, short messages with the respective Replace Short Message Type indication held in the short message serving centre SC are automatically replaced by received new ones.

The SMS may be provided to the service provider (short message serving centre SC) after prior arrangement with the network operator. The SMS may be withdrawn on the service provider's request or for network operator reasons.

The SMS may be provided to the SMS user after prior arrangement with the network operator and/or the service provider or may be generally available. The SMS shall be withdrawn on the SMS user's request or for network operator or service provider reasons.

An short message is always conveyed via a short message short message serving centre SC. The short message serving centre SC receives the messages OM from an originating terminal TE1 and relays said short to the terminating or receiving terminal TE2. If necessary, the short message serving centre SC converts the message to an appropriate format corresponding to the kind of terminal shown in more detail in the following Fig.2.

Fig.2 shows the short message service centre SC of Fig.1 receiving in outgoing message OM and delivering the incoming message IM to the second terminal TE2 as shown in Fig.1 and additionally delivering an alternative message IM' over a second short message serving centre SC of a mobile network MN to a mobile terminal TE3.

After reception of the outgoing message OM, the short message service centre SC evaluates the corresponding header information for further treatment. Depending on the number of the receiving terminal contained in said header, it can be evaluated, to which network the corresponding terminal TE2 is connected, e.g. an ISDN terminal or a GSM terminal.

If the receiving terminal TE3 is a terminal of a mobile network wherein a short message service is realised, e.g. a GSM terminal, the short message service centre SC takes the short message out of the outgoing message OM and delivers said short message by means of an appropriate (GSM) protocol as further incoming message IM' to a corresponding second short message service centre SC2 of said mobile network. The second short message service centre SC2 stores and forwards said incoming message IM' to the corresponding receiving terminal TE3.

Alternatively, the short message service centre SC of the ISDN network and the second short message service centre SC2 of the GSM network may be combined into one unique short message service centre.

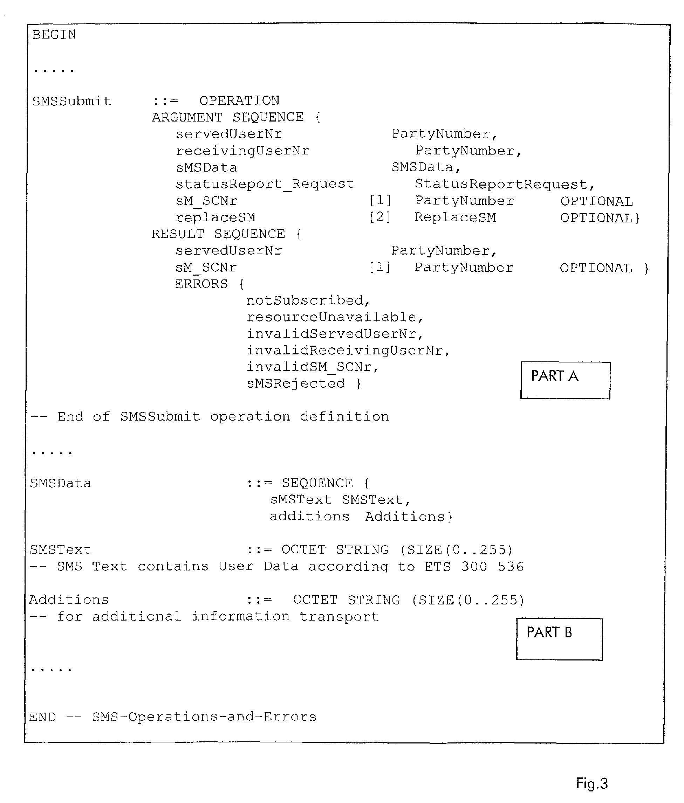

Fig.3 shows parts of a script for definitions of operations and errors required for the SMS service to be stored in a terminals according to the invention denoted in the so-called Abstract Syntax Notation One (ASN.1). Therein, OPERATION and ERROR macros as defined in the ITU-T recommendations X.219 are used.

A first PART A defines the SMSSubmit operation of short messages for transportation of the outgoing message OM shown in Fig.1. Within the script, servedUserNr represents the number of the sending terminal TE1, receivingUserNr represents the number of the receivng terminal TE2 or TE3, the sM_SCNr represents the number of the short message service centre SC and the SMSData represents the short message according to the ETSI standard ETS 300 536. The address information is used by the receiving local exchange LEX1 for routing said outgoing message to the indicated short message service centre SC.

A second PART B defines an SMSData container for the GSM specific SMS text SMSText (according to ETS 300 536) for transparent transport of said SMS Data over the ISDN. A further part of the SMSData container is for network specific use (control info, additional addressing information etc.) and this SMS data part together with the address information (servedUserNr, receivingUserNr and sM_SNCr) is transported in a defined SMS submit invoke component over the ISDN. The ISDN network uses said addressing information for routing purposes.

## Claims

1. A method for exchanging text messages of limited size, further referred to as short messages, over a communications network (CN) comprising a signalling network for the control of communications services, wherein a short message server (SC) controls the exchange of said short messages, **characterized in, that** the following steps are performed:
• a sending terminal (TE1) generates a data container or data packet (OM) comprising a short message and a header, the header comprising the (addressing) numbers of each the sending terminal (TE1), the receiving terminal (TE2) and the short message server (SC),
• the sending terminal (TE1) transmits said data packet (OM) to an exchange (LEX1) via a signalling channel,
• the exchange forwards said data packet (OM) to the short message server (SC) over said signalling network by evaluating said header and
• after evaluation of the number of the receiving terminal (TE2), the short message server (SC) forwards a corresponding data packed (IM).

2. A method according to claim 1, **characterized in, that** the short message server (SC) detects the network (CN, MN), the receiving terminal (TE2) is connected to, by evaluating the receiving number and transmits said data packet (OM), short message or the content of said short message by means of an appropriate protocol or service to the corresponding receiving terminal (TE2) or to a corresponding network device(SC2).

3. A method according to claim 1, **characterized in, that** a further part of the data packet (OM, IM) is for network specific use of said communications network (CN) comprising further control information, and additional addressing information.

4. A short message server (SC) for relaying short messages sent between terminals (TE1, TE2) connected to a communications network (CN) by means of at least one signalling channel, **characterized in, that** receiving means, that are realised such, that data packets (OM) comprising a short message and a header with the numbers of each the sending terminal (TE1), the receiving terminal (TE2) and said short message server (SC) on a signalling interface within said communications network (CN) are received, evaluating means that are realised such, that a receiving device (TE2, SC) is determined out of said header and sending means, that are realised such ,that a corresponding data packet (IM) is transmitted to the corresponding receiving device.

5. A terminal (TE1) for sending short messages over a communications network (CN) to a short message server (SC), to be connected to an exchange (LEX1) of said communications network via at least one signalling channel, **characterized in, that** generating means are provided that are realised such, that a data packet is generated out of a short message entered or stored in said terminal (TE1) and a header comprising the calling numbers of each the sending terminal (TE1), the receiving terminal (TE2) and a short message server (SC) and sending means are provided, that are realised such, that said data packet (OM) is transmitted to said exchange (LEX1) via the signalling channel.

6. A program module to be executed in a terminal (TE1) for sending short messages over a communications network (CN) to a short message server (SC), connected to an exchange (LEX1) of said communications network via at least one signalling channel, **characterized in, that** if said program module is activated, an outgoing data packet (OM) comprising a short message entered or stored in said terminal (TE1) and a header comprising the numbers of each the sending terminal (TE1), the receiving terminal (TE2) and a short message server (SC) is transmitted to said exchange (LEX1) via the signalling channel.
